# EUROPEAN PATENT SPECIFICATION

(11) **EP 2 262 636 B1**
(45) Date of publication and mention of the grant of the patent: **26.09.2012**
(21) Application number: 09728950.8
(22) Date of filing: 19.03.2009
(51) Int. Cl.: B29C 70/32

(54) **Method of manufacturing a laminated composite item by a winding process, related apparatus and product**
Verfahren zur Herstellung eines beschichteten Verbundelements in einem Wicklungsverfahren sowie entsprechendes Gerät und Produkt
Procédé de fabrication d'un article composite stratifié par un procédé d'enroulement, appareil et produit associés

(30) Priority: 31.03.2008 DK 200800470
(43) Date of publication of application: 22.12.2010
(73) Proprietor: Vestas Wind Systems A/S, 8200 Aarhus N (DK)
(72) Inventor: BECH, Anton, DK-6950 Ringkøbing (DK)
(74) Representative: Plougmann & Vingtoft A/S
(86) International application number: PCT/DK2009/050063
(87) International publication number: WO 2009/121368

(56) References cited:
- WO-A-2007/010064

## Description

### FIELD OF THE INVENTION

The present invention relates to a method of manufacturing a laminated composite item and in particular to a method comprising winding tape of resin-impregnated fibres onto a mandrel.

### BACKGROUND OF THE INVENTION

Laminated composite items having a non-concave cross section can be manufactured by a winding process in which a tape of fibres having passed a container with a liquid thermosetting resin is wound onto a mandrel. The composite item is build-up by winding successive overlapping helical convolutions onto the rotating mandrel while advancing the tape back and forth along the mandrel by use of a carriage assembly. Such a manufacturing process is typically used to manufacture elongated items. An example is wind turbine blade spars where the varying cross section of the spar is obtained by reversing the carriage holding the tape closer and closer to the root end of the spar. The pitch of the tape means that the root end of the spar must be made with an excess amount of material which has to be removed afterwards to obtain a blade spar having a constant thickness at the root. The excess material is formed as a ring with a triangular cross section, one tape width long and thick as the laminate. For 40-45 m long blades, the material lost by the removal of the excess ring is in the order of 100-150 kg per blade. This means a waste both of material and of time spent on applying the excess material and removing it again.

Document WO2007/010064 shows a method of manufacturing a laminated composite item comprising the step of winding successive overlapping helical convolutions of resin impregnated tape onto a mandrel while advancing the tape back and forth along the mandrel, the tape comprising one or more layers of fibres.

Hence, an improved and more efficient manufacturing method would be advantageous.

### OBJECT OF THE INVENTION

It is an object of the present invention to provide a method of manufacturing laminated composite items by winding with no need to remove significant amounts of excess material afterwards. It may still be necessary to machine the end surface e.g. by milling to obtain a desired final surface quality. For wind turbine blade spars, the amount of material being removed hereby is typically in the order of a few kilos.

It is another object of the present invention to provide a manufacturing method by which the amount of waste material is decreased compared to known winding methods. This is advantageous both for financial and environmental reasons.

It is another object of the present invention to provide a manufacturing method by which the production time is decreased compared to known winding methods.

It is an object of some embodiments of the invention to provide such a manufacturing method without the need to use an additional tape close to the end of the item.

It is a further object of the present invention to provide an alternative to the prior art.

### SUMMARY OF THE INVENTION

Thus, the above described object and several other objects are intended to be obtained in a first aspect of the invention by providing a method of manufacturing a laminated composite item, said method comprising the step of winding successive overlapping helical convolutions of resin impregnated tape onto a mandrel while advancing the tape back and forth along the mandrel, the tape comprising one or more layers of fibres, wherein sections of the tape being wound onto the mandrel near an end of the mandrel are folded to obtain an end surface of the composite item which is substantially perpendicular to a longitudinal axis of the composite item.

By folding is meant that a side section of the tape, i.e. a section comprising an edge, is folded preferably to be caught underneath the wound tape. This will be illustrated in the figures. Hereby it can be prevented that the folded tape opens at the fold due to spring back tension in the fibres. By the folding of the tape used for the remainder of the composite item, a substantially final geometry can be obtained without the need to use an additional tape. This may be advantageous because the winding apparatus does not need further tape carriages, and because application of only one spool of tape has to be initiated.

The method is preferably used to manufacture elongated items, but in principle any non-concave geometry can be made. The folding technique can be applied in one or both end(s) of the item.

The layers of fibres in a tape preferably form a coherent tape. Such coherence is preferably obtained by weaving or stitching, but other joining methods, such as gluing may also be used. Within each layer, the fibres are typically unidirectionally oriented, but they may also have different orientations and they may be interwoven.

The final geometry of the composite item may vary slightly from the geometry at the termination of the winding e.g. due to curing shrinkage, milling as described above, or drilling of mounting holes.

A width of the folded tape perpendicular to a longitudinal direction of the tape may decrease from where a fold is initiated while the tape is moved towards the corresponding end of the mandrel and may increase while the tape is moved away from that end.

The tape may be folded by use of a folding tool having a U-shaped cross section at least at a delivery point where the tape leaves the folding tool to be wound onto the mandrel. This means that the tape is guided into the final shape by the tool without the need for any moving parts. Such moving parts could otherwise catch loose fibre ends causing damage of the tape and/or interruption of the winding process. Other types of guiding means may also be used to obtain the folding instead of or in combination with a U-shaped tool. The guiding is advantageous due to the spring back tension in the fibres.

The delivery point may be in close proximity of, such as within 50 mm from, a point of contact between the tape and the wound item. Hereby the tape is supported for as long as possible decreasing the risk of un-folding due to spring back tension in the fibres. The folding tool should preferably not apply any pressure on the wound item as that would be likely to cause damage of the material.

Two or more tapes may be wound onto the mandrel at the same time. Fibre yarn may also be wound onto the mandrel between the layers of tape, e.g. to assist in compressing the layers and to add strength to the composite item in the transverse direction.

The method may further comprise winding one or more fibre yarns onto the composite item between selected layers of folded tape to compress the fold. This may be necessary if the folded material would otherwise open up and course distortion of the laminate structure of the wound item.

An alternative method of manufacturing a laminated composite item comprises the steps of
- winding successive overlapping helical convolutions of resin impregnated first tape onto a mandrel while advancing the tape back and forth along the mandrel, the tape comprising one or more layers of fibres, and
- winding layers of a second tape having a straight edge and a serrated edge onto an end section of the mandrel to obtain an end surface of the composite item which is substantially perpendicular to a longitudinal axis of the composite item.

This method could particularly be advantageous for tapes having fibre types and/or a thickness which makes it difficult to fold them satisfactorily.

The distance between two succeeding serrations may substantially correspond to a circumference of the wound composite item. Hereby the material applied by the serrated tape corresponds more or less to the "missing" material from the windings made by the tape used for the remainder of the item, if the windings with this tape are returned when the tape reach an end of the mandrel.

Alternatively the distance between two succeeding serrations may be smaller than a circumference of the wound composite item, such as the distance being between a tenth and a half, such as between a tenth and a fifth or between a fifth and a third of the circumference. This will result in a more random pattern of serrations in such a way that the desired thickness and geometry of the wound item is obtained.

The second tape may comprise a ribbon of unidirectional fibres oriented in a length direction of the second tape. As the tape is typically applied under tension, such unidirectional fibres will assist in holding the turning layers in place under compression.

A method according to the present invention may further comprise the step of heating the composite item to cure the resin.

A second aspect of the invention relates to an apparatus for manufacturing a laminated composite item, the apparatus comprising
- a mandrel onto which a tape can be wound,
- means for rotating the mandrel,
- a carriage assembly adapted to advance the tape back and forth along the mandrel, and
- a folding tool adapted to fold sections of the tape being wound onto the mandrel near an end of the mandrel before it is wound onto the mandrel to obtain an end surface of the composite item which is substantially perpendicular to a longitudinal axis of the composite item.

In any of the embodiments, described above, at least one end of the mandrel may have an end flange with a larger circumference than the mandrel. Such an end flange may be used to assist the positioning of the tape(s) to ensure a correct length of the laminated item. The end flange can also be used as reference when monitoring the thickness of the applied material and counteract resin being drained out of the item during curing at elevated temperature. The flange may be arranged on the mandrel before or after the winding processes depending on which purposes it has to fulfil.

An apparatus according to the present invention may further comprise
- one or more containers for storing resin to be applied to the tape before it is wound onto the mandrel, and
- a carriage assembly adapted to advance the one or more containers back and forth along the mandrel.

A third aspect of the invention relates to a wind turbine blade spar manufactured by a method or by use of an apparatus as described above.

The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The method of manufacturing a laminated composite item according to the invention will now be described in more detail with regard to the accompanying figures. The figures show one way of implementing the present invention and is not to be construed as being limiting to other possible embodiments falling within the scope of the attached claim set.
Figure 1.a shows schematically an elongated item manufactured by a known method resulting in excess material at an end of the item after winding. Fig. 1.b illustrates the relationship between the position of the tape in the length direction of the item (marked with s) and the rotational angle (α) of the mandrel onto which the tape is wound.
Figure 2 shows a longitudinal cross sectional view of an item manufactured by a known winding method.
Figure 3 shows schematically the folding of the tape in a manufacturing method according to the present invention. The figure shows how the width of the folded tape decreases when the tape is moved towards the end of the mandrel and increases when the tape is moved away from the end of the mandrel.
Figure 4 shows that the side edge of the tape is folded and held in place by the tape while being wound onto the mandrel
Figure 5 shows schematically a cross sectional shape of a folding tool seen in the longitudinal direction of the tape.
Figure 6 is a schematic top view of a folding tool used to wind tape onto a composite item being manufactured according to the present invention. Figure 6.a and 6.b show the situation just before and just after the direction of the tape is changed.
Figure 7 is a schematic end view of the process in figure 6.
Figure 8 is a step in a manufacturing method comprising use of a second tape. The second tape has a straight edge and a serrated edge.
Figure 9 shows schematically a part of a mandrel with an end flange.

### DETAILED DESCRIPTION OF AN EMBODIMENT

One way of manufacturing elongated, laminated composite items, as e.g. wind turbine blade spars, is by a winding process in which a tape 2 made from coherent layers of fibres is wound onto a mandrel 3. Before being wound onto the mandrel 3, the tape 2 typically passes a container (not shown) with a liquid thermosetting resin. The composite item 1 is build-up by winding successive overlapping helical convolutions of tape 2 onto the mandrel 3 while advancing the tape 2 back and forth along the mandrel 3 by use of a carriage assembly (not shown). Such a process is known to a person skilled in the art, and in order to focus on the inventive aspects of the present invention, several parts of the manufacturing equipment are left out in the figures; these parts include the resin container, the drive assembly for rotating the mandrel, and the carriage assembly for moving the tape 2.

The background of the present invention is related to the manufacture of items having an end surface being substantially perpendicular to the longitudinal axis of the item and having a substantially constant laminate thickness at least at that end. For wind turbine blade spars, such an end surface is typically present at the root end of the spar. When a wind turbine blade spar is manufactured by known winding methods, it is necessary to wind a spar being longer than the finished specimen due to the pitch of the tape. Otherwise the spar would not have the correct geometry and thickness at the root end.

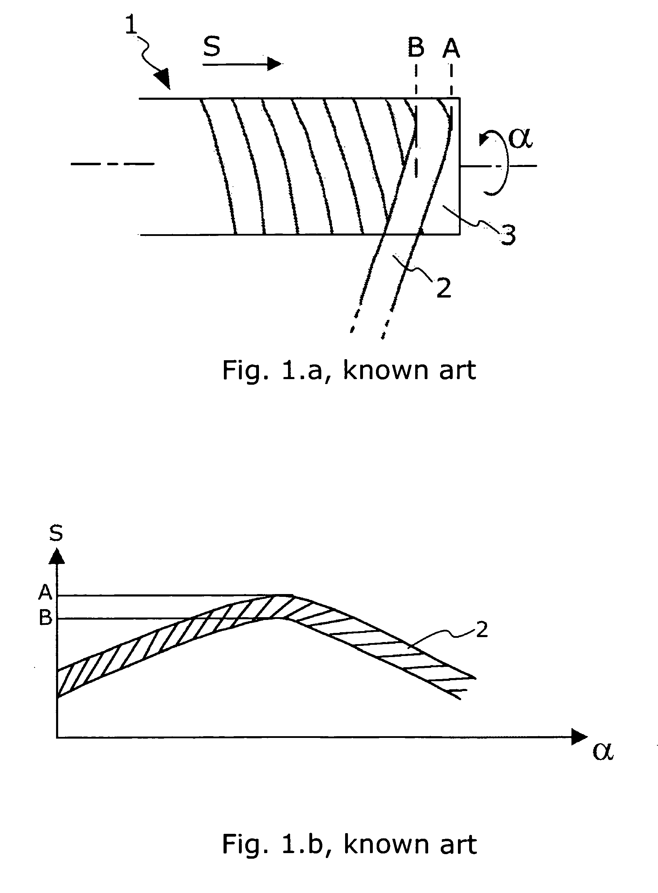

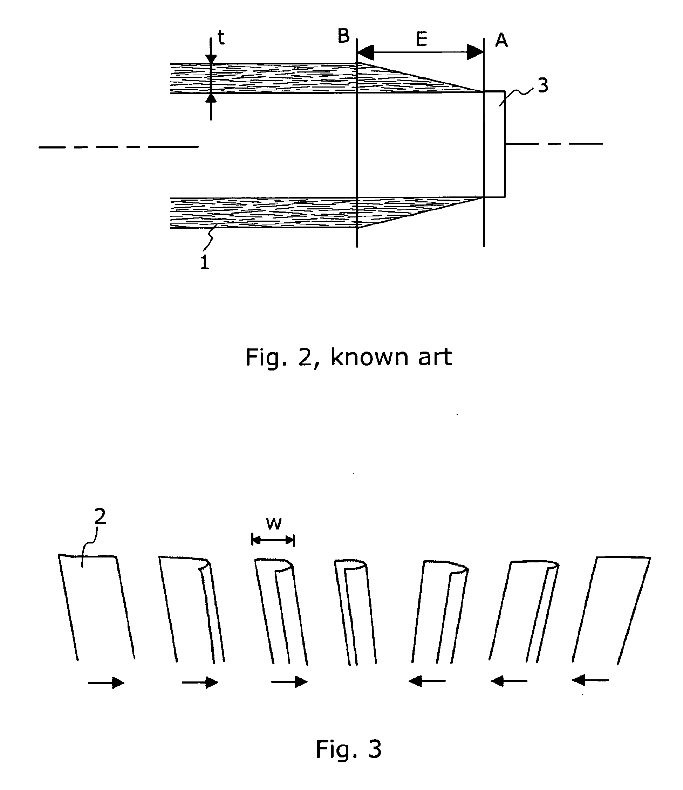

Figure 1.a shows schematically an elongated item 1 manufactured by a known method resulting in excess material at an end of the item after winding. This excess material, marked E in figure 2, must be removed after the resin has cured which results in a waste of both material and time; the wasted time being spent by first adding and afterwards removing material. Figure 1.b shows the relationship between the position of the tape in the length direction of the item (marked with s) and the rotational angle (α) of the mandrel onto which the tape is wound. The angular position of the part of the tape between A and B, i.e. the excess material, typically varies from layer to layer resulting in a cross sectional geometry of the wound item as shown in figure 2. The excess material has a thickness decreasing from the thickness, t, of the composite item 1.

The tape used to manufacture laminated composites by winding may e.g. be comprised of layers of transverse fibres being oriented at opposite orientations close to perpendicular to the longitudinal direction of the tape 2 and layers of unidirectional fibres in the longitudinal direction. The layers may e.g. be stitched together and/or the fibres in some or all of the layers may be interwoven. The transverse fibres provide the bending strength in the length direction of the manufactured item 1, and the longitudinal fibres are used to compress the wound material during manufacturing as well as to provide strength in the transverse direction of the manufactured item.

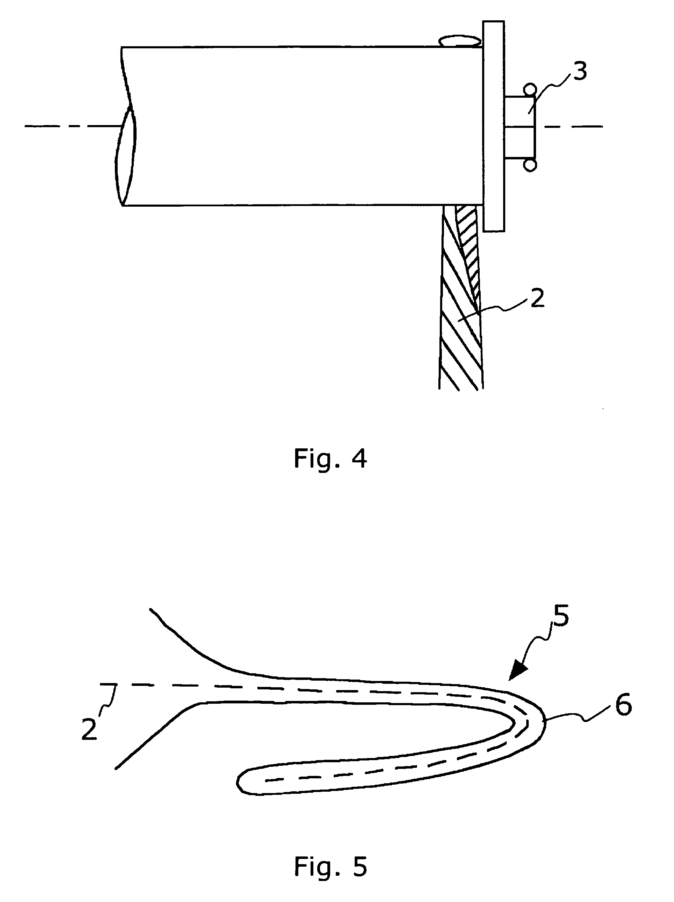

Figure 3 shows schematically how the tape can be folded to obtain an elongated composite item 1 manufactured by winding in such a way that there is no need to remove substantial amounts of excess material afterwards. This is obtained by folding the tape 2 near an end of the item 1 being wound so that the width, w, of the folded tape decreases when the tape is moved towards the end of the mandrel and increases when the tape is moved away from the end of the mandrel. The direction of movement of the carriage assembly holding the tape is shown by arrows in figure 3. The edge of the tape 2 is preferably folded inwards so that the folded material is clamped between the outer portion of the tape 2 and the material previously applied. Hereby it can be prevented that the folded tape 2 opens at the fold due to spring back tension in the fibres. The principle is further illustrated in figure 4 showing that the side edge of the tape is folded and held in place by the tape while being wound onto the mandrel. The unidirectional fibres in the longitudinal direction of the tape 2 will tension the outer portion of the tape 2 towards the folded portion of the tape 2 which may ensure that the folded neck is sufficiently compressed to stay flat. In case the fold does not become sufficiently flat, one or more additional fibre yarns (not shown) may be applied under tension to hold the fold down. Such fibre yarns may be used along the whole length of the item 1 or only where the tape 2 is folded.

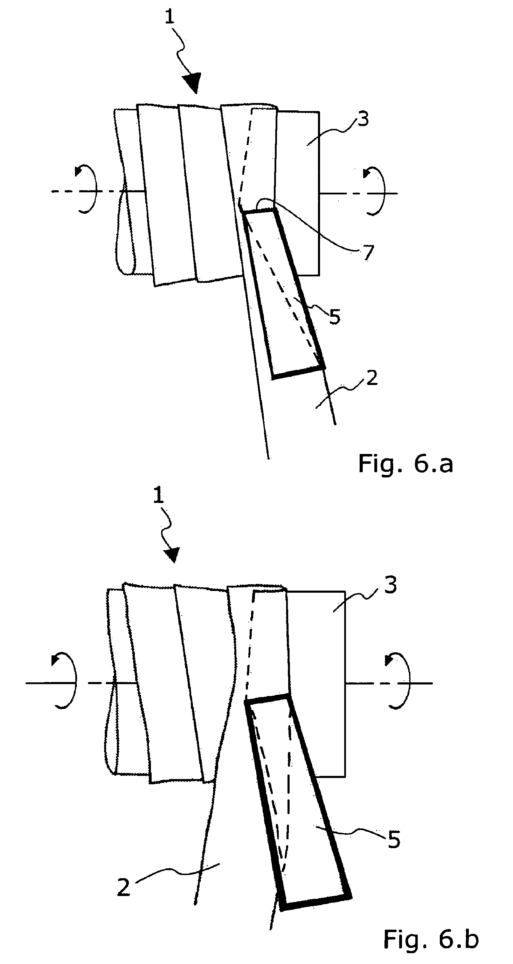

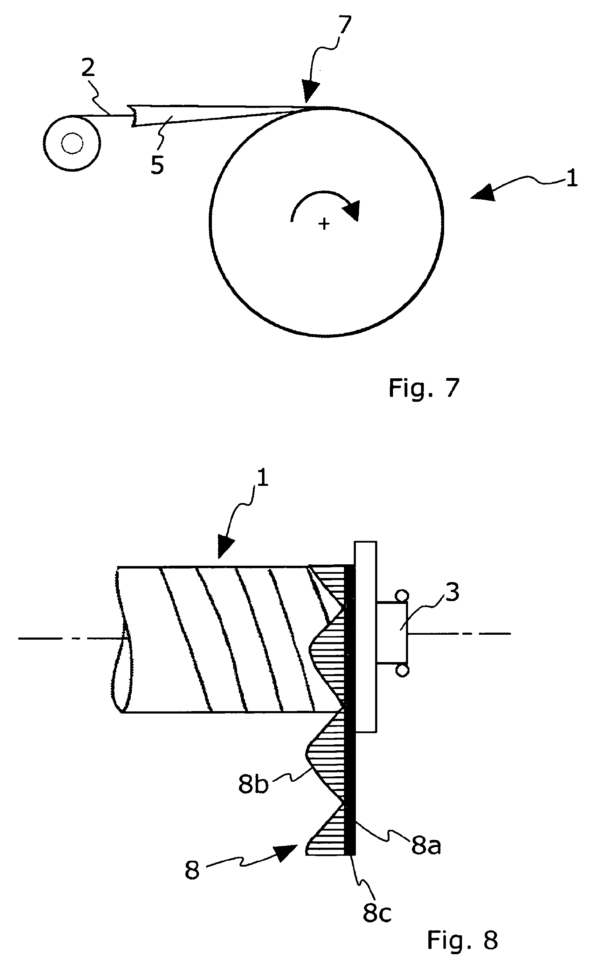

The folding of the tape 2 may e.g. be obtained by use of a folding tool 5 having a cross sectional shape as shown schematically in figure 5. The folding tool 5 is seen in the longitudinal direction of the tape 2. Figure 6 is a schematic top view of the folding tool 5 of figure 5 used to wind tape 2 onto a composite item 1 being manufactured according to the present invention. Figure 6.a and 6.b show the orientation of the tape 2 just before and just after the direction of the carriage assembly holding the tape is changed. The folded material is indicated by broken line. During winding towards the right end of the mandrel (with respect to figure 6), the tape 2 runs deeper and deeper into the folding tool 5 from the side. When the side edge of the tape 2 reaches the U-bend 6 in the folding tool 5, it follows the bend 6 and comes out in a U-shape form. The delivery point 7 of the folding tool 5 is close to the tangential point of contact between the tape 2 and the wound item 1 as shown in figure 7, which is a schematic end view of the process shown in figure 6. Hence the folded edge is trapped under the tape 2 just after exiting the forming tool 5. This prevents spring back of the folded part of the tape 2. The folding tool 5 is typically only moved in the radial direction of the wound item. However, it is also possible within the scope of the present invention that the folding tool 5 is moved back and forth along the part of the mandrel 3 where the fold is to be made or that it is pivoted. The shape and position of the folding tool 5 with respect to the course of the tape 2 is preferably selected so that only an insignificant amount of resin is removed from the tape 2 by the folding tool 5. The actual size and shape of the folding tool 5 may differ from the one shown in the figures as long as the object of the invention is obtained.

When the tape 2 reaches the end of the mandrel 3 and the carriage assembly changes direction, the width of the folded tape is increased until the tape 2 is unfolded again and can be use for the remainder of the item 1; see figure 6.b. The fold is preferably made each time the tape reaches the end, but it may alternatively only be made for a predefined number of windings. In this case the carriage assembly should preferably change direction when the edge of the windings of tape 2 not being folded reach the end of the mandrel 3 to avoid excess material to be removed afterwards.

Figure 8 illustrates schematically a step in an alternative manufacturing method in which a substantially final geometry after winding is obtained by use of a second tape 8; i.e. another tape than that used for the winding of remainder of the composite item 1. The second tape 8 is preferably not moved along the mandrel 3.

The illustrated second tape 8 has a straight edge 8a and a serrated edge 8b, and it comprises a ribbon 8c of unidirectional fibres positioned at the straight edge 8a. The tape 8 is applied under tension, and the unidirectional fibres thereby provide a compression of the turning layer which assists in keeping the second tape 8 in place. The application of the first tape 2 used for the remainder of the item is returned when that tape 2 reaches the end 4 of the mandrel 3, and the "missing" material is formed by the serrated tape 8. In some embodiments of the invention, the serrated tape 8 is made from the same type of fibres as the tape 2 used for the remainder of the item 1. In other embodiments, a thicker serrated tape 8 may be used, and it may be possible to only apply the serrated tape 8 between predetermined numbers of the other layers of tape 2. In contrast to the embodiments with a fold described above, the use of a serrated second tape 8 makes the use of an additional roll of tape and corresponding resin container necessary. On the contrary, it does not need a folding tool 5, and the choice of manufacturing method may be up to the actual manufacturing site. The choice may e.g. depend on the type of tape 2 used, as some fibres and thicknesses are easier to fold than others.

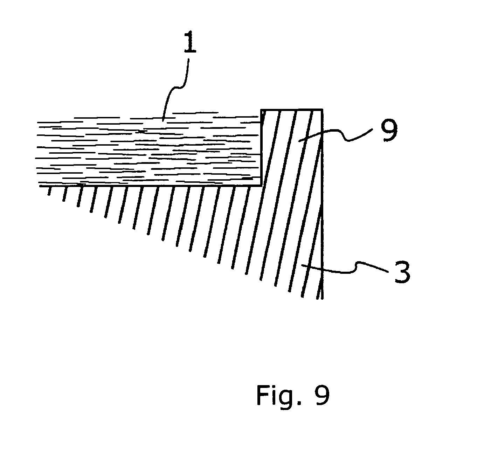

In some embodiments of the invention, the mandrel 3 onto which the tape 2,8 is wound comprises an end flange 9 as illustrated in figure 9. Such an end flange 9 can be used to assist the positioning of the tape to ensure a correct length of the laminated item 1. In the embodiments with a folded tape 2, it must be ensured that the neck of the fold is right in front of the end flange 9 so that there is not too much material "trapped" behind the end flange 9. The end flange 9 can also be used as reference when monitoring the thickness of the applied material and counteract resin being drained out of the item 1. A semi-permeable membrane (not shown) may be applied to cover the interface between the flange and the laminate in order to reduce the resin bleed out of the laminate end. The end flange 9 should preferably be axially moveable in such a way that the de-moulding clamps (not shown) can act on the end flange 9 and press the item 1 off the mandrel 3 after curing.

In all the embodiments of the invention, any appropriate type of fibres may be used, such as glass, carbon or aramide fibres. A tape 2 may also be made from two or more types of fibres, and parts of the laminated composite item 1 may be made from an additional type of tape, such as a tape having another type of fibres than what is used for the remainder of the item. The resin is a thermosetting resin and may e.g. be polyester, vinyl ester or epoxy. After termination of the winding, the item is typically left to cure at elevated temperature while being rotated on the mandrel. The actual curing temperature and time depends on the type of resin used and the thickness of the laminate.

The above description is related to embodiments in which the tape passes a container with a liquid thermosetting resin before it is wound onto the mandrel. However, embodiments in which the tape is supplied from a spool of preimpregnated fibres are also covered by the scope of the present invention.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method of manufacturing a laminated composite item (1), said method comprising the step of winding successive overlapping helical convolutions of resin impregnated tape (2) onto a mandrel (3) while advancing the tape (2) back and forth along the mandrel (3), the tape (2) comprising one or more layers of fibres, **characterised in that** sections of the tape (2) being wound onto the mandrel (3) near an end of the mandrel (3) are folded to obtain an end surface of the composite item (1) which is substantially perpendicular to a longitudinal axis of the composite item (1).

2. A method according to claim 1, wherein a width of the folded tape (2) perpendicular to a longitudinal direction of the tape (2) decreases from where a fold is initiated while the tape (2) is moved towards the corresponding end of the mandrel (3) and increases while the tape (2) is moved away from that end.

3. A method according to claim 1 or 2, wherein the tape (2) is folded by use of a folding tool (5) having a U-shaped cross section at least at a delivery point (7) where the tape (2) leaves the folding tool (5) to be wound onto the mandrel (3).

4. A method according to claim 3, wherein the delivery point (7) is in close proximity of, such as within 50 mm from, a point of contact between the tape (2) and the wound item (1).

5. A method according to any of the preceding claims further comprising winding one or more fibre yarns around the composite item (1) between selected layers of folded tape (2) to compress the fold.

6. A method of manufacturing a laminated composite item (1), said method comprising the steps of
- winding successive overlapping helical convolutions of resin impregnated first tape (2) onto a mandrel (3) while advancing the tape (2) back and forth along the mandrel (3), the tape (2) comprising one or more layers of fibres, and
- winding layers of a second tape (8) having a straight edge (8a) and a serrated edge (8b) onto an end section of the mandrel (3) to obtain an end surface of the composite item (1) which is substantially perpendicular to a longitudinal axis of the composite item (1).

7. A method according to claim 6, wherein the distance between two succeeding serrations substantially corresponds to a circumference of the wound composite item (1).

8. A method according to claim 6, wherein the distance between two succeeding serrations is smaller than a circumference of the wound composite item (1), such as the distance being between a tenth and a half, such as between a tenth and a fifth or between a fifth and a third of the circumference.

9. A method according to any of claims 6 to 8, wherein the second tape (8) comprises a ribbon (8c) of unidirectional fibres oriented in a length direction of the second tape (8).

10. A method according to any of the preceding claims further comprising the step of heating the composite item (1) to cure the resin.

11. An apparatus for manufacturing a laminated composite item (1), the apparatus comprising
- a mandrel (3) onto which a tape (2) can be wound,
- means for rotating the mandrel (3),
- a carriage assembly adapted to advance the tape (2) back and forth along the mandrel (3), and
- a folding tool (5) adapted to fold sections of the tape (2) being wound onto the mandrel (3) near an end of the mandrel (3) before it is wound onto the mandrel (3) to obtain an end surface of the composite item (1) which is substantially perpendicular to a longitudinal axis of the composite item (1).

12. An apparatus according to claim 11, wherein the folding tool (5) is adapted to fold the tape (2) in such a way that a width of the folded tape (2) perpendicular to a longitudinal direction of the tape (2) decreases from where a fold is initiated while the tape (2) is moved towards the corresponding end of the mandrel (3) and increases while the tape (2) is moved away from that end.

13. An apparatus according to claim 11 or 12, wherein the folding tool (5) has a U-shaped cross section at least at a delivery point (7) where the tape (2) leaves the folding tool (5) to be wound onto the mandrel (3).

14. An apparatus according to any of claims 11 to 13, wherein at least one end of the mandrel (3) has an end flange (9) with a larger circumference than the mandrel (3).

15. A wind turbine blade spar manufactured by a method according to any of claims 1 to 10 or by use of an apparatus according to any of claims 11 to 14.

## Patentansprüche

1. Verfahren zur Herstellung eines laminierten Verbundgegenstands (1), wobei das Verfahren den Schritt des Aufwickelns von aufeinanderfolgenden überlappenden schraubenförmigen Faltungen eines mit Harz getränkten Bands (2) auf einen Dorn (3) umfasst, wobei das Band (2) auf dem Dorn (3) vor und zurück bewegt wird, wobei das Band (2) eine oder mehrere Schichten aus Fasern umfasst, **dadurch gekennzeichnet, dass** Abschnitte des Bands (2), die nahe einem Ende des Dorns (3) auf den Dorn (3) gewickelt werden, gefaltet werden, um eine Endfläche des Verbundgegenstands (1) zu erhalten, die im Wesentlichen senkrecht zu einer Längsachse des Verbundgegenstands (1) ist.

2. Verfahren nach Anspruch 1, wobei eine Breite des gefalteten Bands (2) senkrecht zu einer Längsrichtung des Bands(2) vom Beginn einer Falte abnimmt, während das Band (2) zu dem entsprechenden Ende des Dorns (3) bewegt wird, und zunimmt, während das Band (2) von diesem Ende weg bewegt wird.

3. Verfahren nach Anspruch 1 oder 2, wobei das Band (2) unter Verwendung eines Faltwerkzeugs (5) mit einem U-förmigen Querschnitt mindestens an einem Abgabepunkt (7), an dem das Band (2) das Faltwerkzeug (5) zum Aufwickeln auf den Dorn (3) verlässt, gefaltet wird.

4. Verfahren nach Anspruch 3, wobei sich der Abgabepunkt (7) in enger Nähe, wie innerhalb von 50 mm, zu einem Punkt der Berührung zwischen dem Band (2) und dem gewickelten Gegenstand (1) befindet.

5. Verfahren nach einem der vorhergehenden Ansprüche, weiterhin umfassend das Aufwickeln eines oder mehrerer Fasergarne um den Verbundgegenstand (1) zwischen ausgewählten Schichten des gefalteten Bands (2), um die Falte zusammenzudrücken.

6. Verfahren zur Herstellung eines laminierten Verbundgegenstands (1), wobei das Verfahren folgende Schritte umfasst
- Aufwickelns von aufeinanderfolgenden überlappenden schraubenförmigen Faltungen eines mit Harz getränkten ersten Bands (2) auf einen Dorn (3), wobei das Band (2) auf dem Dorn (3) vor und zurück bewegt wird, wobei das Band (2) eine oder mehrere Schichten aus Fasern umfasst, und
- Aufwickeln von Schichten eines zweiten Bands (8) mit einer geraden Kante (8a) und einer gezahnten Kante (8b) auf einen Endabschnitt des Dorns (3), um eine Endfläche des Verbundgegenstands (1) zu erhalten, die im Wesentlichen senkrecht zu einer Längsachse des Verbundgegenstands (1) ist.

7. Verfahren nach Anspruch 6, wobei der Abstand zwischen zwei aufeinanderfolgenden Zahnungen im Wesentlichen einem Umfang des aufgewickelten Verbundgegenstands (1) entspricht.

8. Verfahren nach Anspruch 6, wobei der Abstand zwischen zwei aufeinanderfolgenden Zahnungen kleiner ist als der Umfang des aufgewickelten Verbundgegenstands (1), wie ein Abstand zwischen einem Zehntel und der Hälfte, wie zwischen einem Zehntel und einem Fünftel oder zwischen einem Fünftel und einem Drittel des Umfangs.

9. Verfahren nach einem der Ansprüche 6 bis 8, wobei das zweite Band (8) einen Streifen (8c) aus gleichlaufenden Fasern umfasst, die in einer Längsrichtung des zweiten Bands (8) ausgerichtet sind.

10. Verfahren nach einem der vorhergehenden Ansprüche, weiterhin umfassend den Schritt des Erwärmens des Verbundgegenstands (1) zum Härten des Harzes.

11. Vorrichtung zur Herstellung eines laminierten Verbundgegenstands (1), wobei die Vorrichtung umfasst
- einen Dorn (3), auf den ein Band (2) gewickelt werden kann,
- Mittel zum Drehen des Dorns (3),
- eine Schlitteneinheit, die dazu beschaffen ist, das Band (2) auf dem Dorn (3) vor und zurück zu bewegen, und
- ein Faltwerkzeug (5), das zum Falten von Abschnitten des Bands (2) beschaffen ist, die nahe einem Ende des Dorns (3) auf den Dorn (3) gewickelt werden, ehe sie auf den Dorn (3) gewickelt werden, um eine Endfläche des Verbundgegenstands (1) zu erhalten, die im Wesentlichen senkrecht zu einer Längsachse des Verbundgegenstands (1) ist.

12. Vorrichtung nach Anspruch 11, wobei das Faltwerkzeug (5) derart zum Falten des Bands (2) beschaffen ist, dass eine Breite des gefalteten Bands (2) senkrecht zu einer Längsrichtung des Bands(2) vom Beginn einer Falte abnimmt, während das Band (2) zu dem entsprechenden Ende des Dorns (3) bewegt wird, und zunimmt, während das Band (2) von diesem Ende weg bewegt wird.

13. Vorrichtung nach Anspruch 11 oder 12, wobei das Faltwerkzeug (5) einen U-förmigen Querschnitt mindestens an einem Abgabepunkt (7), an dem das Band (2) das Faltwerkzeug (5) zum Aufwickeln auf den Dorn (3) verlässt, aufweist.

14. Vorrichtung nach einem der Ansprüche 11 bis 13, wobei mindestens ein Ende des Dorns (3) einen Endflansch (9) mit einem größeren Umfang als der Dorn (3) aufweist.

15. Holm für ein Blatt einer Windkraftanlage, hergestellt mittels eines Verfahrens nach einem der Ansprüche 1 bis 10 oder unter Verwendung einer Vorrichtung nach einem der Ansprüche 11 bis 14.

## Revendications

1. Procédé de fabrication d'un article (1) composite stratifié, ledit procédé comprenant l'étape d'enroulement de circonvolutions hélicoïdales successives se chevauchant d'une bande (2) imprégnée de résine sur un mandrin (3) tout en faisant aller et venir la bande (2) le long du mandrin (3), la bande (2) comprenant une ou plusieurs couches de fibres,
**caractérisé en ce que** des parties de la bande (2) en cours d'enroulement sur le mandrin (3) près d'une extrémité du mandrin (3) sont pliées pour obtenir une surface d'extrémité de l'article (1) composite qui est essentiellement perpendiculaire à un axe longitudinal de l'article (1) composite.

2. Procédé selon la revendication 1, dans lequel une largeur de la bande (2) pliée perpendiculaire à une direction longitudinale de la bande (2) diminue à partir du point où un pli commence lorsque la bande (2) est déplacée vers l'extrémité correspondante du mandrin (3) et augmente lorsque la bande (2) est éloignée de cette extrémité.

3. Procédé selon la revendication 1 ou 2, dans lequel la bande (2) est pliée au moyen d'un outil de pliage (5) possédant une section transversale en forme de U au moins au niveau d'un point d'alimentation (7) où la bande (2) quitte l'outil de pliage (5) pour être enroulée sur le mandrin (3).

4. Procédé selon la revendication 3, dans lequel le point d'alimentation (7) se trouve à proximité immédiate, par exemple à une distance n'excédant pas 50 mm, d'un point de contact entre la bande (2) et l'article (1) enroulé.

5. Procédé selon l'une quelconque des revendications précédentes comprenant en outre l'enroulement d'un ou plusieurs fils textiles autour de l'article (1) composite entre des couches sélectionnées de bande (2) pliée afin de comprimer le pli.

6. Procédé de fabrication d'un article (1) composite stratifié, ledit procédé comprenant les étapes suivantes :
- enroulement de circonvolutions hélicoïdales successives se chevauchant d'une première bande (2) imprégnée de résine sur un mandrin (3) tout en faisant aller et venir la bande (2) le long du mandrin (3), la bande (2) comprenant une ou plusieurs couches de fibres, et
- enroulement de couches d'une deuxième bande (8) possédant un bord droit (8a) et un bord dentelé (8b) sur une partie d'extrémité du mandrin (3) pour obtenir une surface d'extrémité de l'article (1) composite qui est essentiellement perpendiculaire à un axe longitudinal de l'article (1) composite.

7. Procédé selon la revendication 6, dans lequel la distance entre deux dentelures successives correspond essentiellement à une circonférence de l'article (1) composite enroulé.

8. Procédé selon la revendication 6, dans lequel la distance entre deux dentelures successives est inférieure à une circonférence de l'article (1) composite enroulé, telle que la distance est comprise entre le dixième et la moitié, telle qu'entre le dixième et le cinquième ou entre le cinquième et le tiers de la circonférence.

9. Procédé selon l'une quelconque des revendications 6 à 8, dans lequel la deuxième bande (8) comprend un ruban (8c) de fibres unidirectionnelles orienté dans une direction longitudinale de la deuxième bande (8).

10. Procédé selon l'une quelconque des revendications précédentes comprenant en outre l'étape de chauffage de l'article (1) composite pour durcir la résine.

11. Appareil destiné à la fabrication d'un article (1) composite stratifié, l'appareil comprenant
- un mandrin (3) sur lequel une bande (2) peut être enroulée,
- des moyens de rotation du mandrin (3),
- un ensemble chariot adapté pour faire aller et venir la bande (2) le long du mandrin (3), et
- un outil de pliage (5) adapté pour plier des parties de la bande (2) en cours d'enroulement sur le mandrin (3) près d'une extrémité du mandrin (3) avant que celle-ci ne soit enroulée sur le mandrin (3) pour obtenir une surface d'extrémité de l'article (1) composite qui est essentiellement perpendiculaire à un axe longitudinal de l'article (1) composite.

12. Appareil selon la revendication 11, dans lequel l'outil de pliage (5) est adapté pour plier la bande (2) de manière à ce qu'une largeur de la bande (2) pliée perpendiculaire à une direction longitudinale de la bande (2) diminue à partir du point où un pli commence lorsque la bande (2) est déplacée vers l'extrémité correspondante du mandrin (3) et augmente lorsque la bande (2) est éloignée de cette extrémité.

13. Appareil selon la revendication 11 ou 12, dans lequel l'outil de pliage (5) possède une section transversale en forme de U au moins au niveau d'un point d'alimentation (7) où la bande (2) quitte l'outil de pliage (5) pour être enroulée sur le mandrin (3).

14. Appareil selon l'une quelconque des revendications 11 à 13, dans lequel au moins une extrémité du mandrin (3) est munie d'une bride d'extrémité (9) possédant une circonférence supérieure à celle du mandrin (3).

15. Longeron de pale de turbine éolienne fabriqué à l'aide d'un procédé selon l'une quelconque des revendications 1 à 10 ou au moyen d'un appareil selon l'une quelconque des revendications 11 à 14.
